# EUROPEAN PATENT SPECIFICATION

(11) **EP 2 238 346 B1**
(45) Date of publication and mention of the grant of the patent: **25.05.2011**
(21) Application number: 08864605.4
(22) Date of filing: 19.12.2008
(51) Int. Cl.: F03D 11/02, F16H 1/28

(54) **EPICYCLIC GEAR STAGE FOR A WIND TURBINE GEARBOX, A WIND TURBINE GEARBOX AND A WIND TURBINE**
PLANETENGETRIEBESTUFE FÜR EIN WINDTURBINENGETRIEBE, WINDTURBINENGETRIEBE UND WINDTURBINE
ÉTAGE D'ENGRENAGE ÉPICYCLOÏDAL POUR UNE BOÎTE D'ENGRENAGE DE TURBINE ÉOLIENNE, BOÎTE D'ENGRENAGE DE TURBINE ÉOLIENNE ET TURBINE ÉOLIENNE

(30) Priority: 20.12.2007 DK 200701842; 20.12.2007 US 15466
(43) Date of publication of application: 13.10.2010
(73) Proprietor: Vestas Wind Systems A/S, 8940 Randers SV (DK)
(72) Inventor: MOSTAFI, Abdelhalim, 70327 Stuttgart (DE)
(74) Representative: Olesen, Kaj
(86) International application number: PCT/DK2008/000441
(87) International publication number: WO 2009/080031

(56) References cited:
- EP-A- 1 544 504
- WO-A-03/014566
- WO-A-2005/050058
- WO-A-2005/050059

## Description

### Field of invention

The invention relates to an epicyclic gear stage according to the preamble of claim 1 and a wind turbine gearbox according to the preamble of claim 14.

### Description of the related art

One widely used gear for conventional industrial gearboxes is the epicyclic gear.

Various types of this gear have a planet carrier with one or two side flanges. In the case of two side, said flanges are normally connected by stanchions. For some embodiments the input, or drive-end (DE), connecting shaft is linked to either of the flanges and the whole arrangement is typically supported against a stationary frame by bearings on either flange.

The planet bearing may either be mounted on an axle that is supported in the two flanges or the bearings are integrated in the flanges. The design is capable of transferring high torque and to support spur as well as helical gearing.

For a planet carrier design including a two-sided flange and double-helical gears the German DE102004023151 describes a concept where the planets are mounted on their respective axles by a carrier section that is positioned off center relative to the central lateral plane of the planetary gear.

Problems related to the said two-flanged carriers which mark the current state-of-the-art are, that torque on the connecting shaft causes a wind-up of the DE-flange relative to the opposite non-drive end (NDE) flange. The planet axles supported by these flanges are consequently inclined relative to the main axis of rotation, which causes misalignment and eventually edge loading of the gear teeth and planet bearings,

Stanchions between the two flanges are intended to prevent or reduce this wind-up, but their space is constrained by the design envelope of the planet gear. The wind-up can further be reduced by increasing flange thickness, planet carrier outer diameter, planet axle outer diameter or stanchion solidity, each of those adding to material consumption, weight and cost of the component.

The stiff concept of a double-flange carrier can in case of even small manufacturing errors lead to poor load distribution along the tooth width of the gear and between planets.

Furthermore in arrangements where the connecting shaft is not only loaded by torque but also by transverse forces and/or moments and where the bearing suspension on either flange against a stationary frame of the carrier becomes a rigid restraint, the arrangement can not rectify for misalignments.

The problem with wind-up load can be solved by the teaching of US patent number 3,227,006, which describes an epicyclic gear stage having a flexible ball and socket joint between two planet carrier plates. The pivot joint is established by means of different elements such as a ball member, different cup members, bolt, nut member, space members, etc. The planet carrier plates are bolted together through the pivot joint elements to facilitate the pivot joint. This leads to a torque transfer point which is aligned with the center of the planet gear wheels and thereby reduces the wind-up load.

Alternative planet carrier designs include single one-sided flange with cantilevered planet axles, typically used for lower torques, and single flange planet carrier with spur planet gears arranged on either side of this flange e.g. as presented in WO03014566.

A problem related to single flange planet carriers with cantilevered shafts is that they are not suitable for high loads because bending of the cantilevered planet axle will cause misalignment of the gears.

Another design is the so called "FlexPin" design where the sun pinion and the ring gear are rigid while the planets are mounted to the planet carrier using flexible bolts - the "FlexPins" as will be known for a person skilled in the art. A problem related to said FlexPin design is that they are not suitable for single-helical gears.

From EP 1 544 504 A1 it is known to connect the planet carrier of an epicyclical gearbox to housing and rotor via elastic elements. But this solution is not cost-efficient or suited for high loads.

It is an object of the present invention to provide an advantageous construction of an epicyclic gearbox with improved load sharing between gears and to provide a technique without the above mentioned disadvantages.

### The invention

The present invention relates to a wind turbine comprising a wind turbine gearbox with an epicyclic gear stage. The epicyclic gear stage comprises a sun gear, an annulus gear, at least two planet gears, engaged with the said sun gear and the annulus gear at least one planet carrier flange carrying the planet gears, and a torque transfer part for transferring torque from the wind turbine rotor wherein said torque transfer part is flexible connected to said planet carrier flange with at least three flexible ball-and-socket joints transferring torque from said wind turbine rotor to said planet carrier flange. The invention is characterized in that the ball part of said flexible ball-and-socket joints is part of said torque transfer part.

By the term flexible is meant that the joint can move during operation relative to the planet carrier. For the example of e.g. a substantially spherical joint it may e.g. partly rotate substantially around its centre during operation in order to not transfer unwanted torque between the torque transferring part and the planet carrier.

By the invention is is ensured that torque from the wind turbine rotor is transferred to the planet carrier and to further connected gear stages and/or other wind turbine components such as a wind turbine generator.

By transferring said torque from said torque transfer part via a flexible connection to said planet carrier it is ensured that gear misalignments are reduced and load sharing between gears comprised in said epicyclic gear stage is maintained even.

Furthermore the gear is capable of maintaining gears aligned to the axis of rotation such that an even load distribution along the facewidth of the gear is achieved over a wide torque range and without being affected by transverse forces and moments.

Further it ensures that a well balanced load distribution along gears under essentially any operation is obtained. This will in turn reduce the variance in operating conditions that the gears are exposed to and make the gears more robust.

Even further the variance in the operating conditions of the planet bearings is reduced and hence the robustness of this critical component is increased.

According to an advantageous embodiment of the invention the torque transfer part is equipped with one or more joints, these joints are flexible connected to the planet carrier flange hence torque is transferred from the joints to the planet carrier flange in one or more torque transfer zones.

According to an advantageous embodiment of the invention the construction of the one or more joints in one piece with the torque transfer part applies strength to the construction and may reduce time for assemble and maintenance of the gear stage.

According to an advantageous embodiment of the invention the one or more joints is of substantially spherical shape at least over the torque transferring zones. This ensures that unwanted torques around the centre of the spherical joint is not transferred from the torque transferring part to the planet carrier. This in turn ensures that gear misalignments are reduced and load sharing between gears comprised in said epicyclic gear stage is maintained even resulting in a prolonged lifetime.

In one aspect of the invention, the socket part of said at least three flexible ball-and-socket joints is part of only one of said first and second planet carrier flanges.

Hereby it is ensured that load sharing between the planet gears i.e. isolation of transverse loads is improved and that dampening that prevents transmission of structure-bone noise via the torque transfer part is achieved e.g. for reducing the excitation of a wind turbine rotor blade by gear frequencies. Furthermore an easy assembling of the gear stage is achieved.

In one aspect of the invention, the ball part of said at least three flexible ball-and-socket joints are formed in one piece with the torque transfer part.

According to an advantageous embodiment of the invention this makes the complete torque transfer part more robust, than if the torque transfer part should transfer torque from the wind turbine rotor to the planet gears though a torque transfer part which is assembled by a plurality of individual parts. Furthermore it may also ease the assembly of the gear at the site when the torque transfer part is manufactured in one part.

In one aspect of the invention, the ball part of said at least three flexible ball-and-socket joints is connected to said torque transfer part by means of one or more threads.

According to an advantageous embodiment of the invention having an exchangeable spherical joint may facilitate replacement if the spherical joint is damaged e.g. because it is exposed to tear.

In one aspect of the invention, the torque transfer part and the planet carrier is connected by means of said at least three flexible ball-and-socket joints so that a free space occurs between the torque transfer part and the planet carrier flange in said at least three flexible ball-and-socket joints.

According to an advantageous embodiment of the invention the free space ensures that flexibility is added to the connection between the torque transfer part and the at least one planet carrier flange.

In another aspect of the invention, torque from the wind turbine rotor is transferred via a torque transfer part connected to said planet carrier at one or more torque transferring zones,
where said one or more torque transferring zones are located between a first and a second plane, said planes being substantially perpendicular to an axis of rotation of the sun gear,
where the first plane is flush with a first inner side of said first planet carrier flange at a position where the gear shaft is carried by said first planet carrier flange, and
where the second plane is flush with a second inner side of said second planet carrier flange at a position where the gear shaft is carried by said second planet carrier flange.

Hereby it is ensured that said torque transferring zones can be positioned in a plane whereby an essential alignment of e.g. the planet axle can be maintained independent of the applied external torque load. Furthermore it is ensured that the alignment of the planet axle is minimally impaired by transverse forces and bending moments acting a torque transfer part e.g. transferring torque from a wind turbine rotor to said epicyclic gear stage.

Hereby it is ensured that torque is transferred to the planet carrier or planet carrier flanges within a limited distance from the midplane of the planet gear thereby minimizing misalignment of the planet axle in relation to the planet carrier and the sun gear.

In another aspect of the invention said first planet carrier flange and said second planet carrier flange are formed in one part.

Hereby an enhanced torque transfer between said first planet carrier flange and said second planet carrier flange is achieved which in turn ensures that the alignment of the planet axle is minimally impaired.

In yet another aspect said one or more joints is held in place by one or more flange rings attached to at least one of said first and second planet carrier flanges.

Hereby it is ensured that the joint is held in position during operation which enables the effect of torque transfer and minimizes tear and wear at the joint. This in turn prolongs the lifetime of the joint and hereby the gear stage. Furthermore said flange rings enable an easy assembling of the gear stage.

In a further aspect of the invention said one or more flange rings is held in place by means of bolts. This ensures a secure connection and attachment of said flange rings and furthermore an quick and easy assembling/disassembling of the flange rings.

In a further aspect of the invention said one or more flange rings is made of a bearing-sleeve material.

According to an embodiment of the invention the bearing-sleeve material has non-steel material properties such material could e.g. be copper, bronze, etc.

According to an advantageous embodiment of the invention the flange rings can be made of a material with special material characteristics e.g. regarding hardness, friction coefficient, wear etc. and /or said rings can be made of a material different from the material of the planet carrier flanges.

In an even further aspect said sun gear and said planet gear and said annulus gear are single helical gears.

Hereby an advantageous gear regarding smooth gear contact, reduction of vibration and load variation, as well as emission of noise is ensured.

In a further aspect of the invention said annulus gear rotates during operation. Hereby it is ensured that torque is transferred for various types of gear stages e.g. with a fixed carrier, in which case torque transfer part is part of the housing, or with a rotating carrier as part of a 3-way epicyclic gear.

### Figures

The invention will be described in the following with reference to the figures in which
- fig. 1: illustrates a large modem wind turbine including three wind turbine blades in the wind turbine rotor,
- fig. 2: illustrates schematically an embodiment of a wind turbine nacelle as seen from the side,
- fig. 3: illustrates schematically as an example of prior art, an embodiment of an epicyclic gearbox as seen from the front,
- fig. 4: illustrates schematically as an example of prior art, an embodiment of an epicyclic gearbox comprising a planet carrier as seen from the front,
- fig. 5: illustrates schematically as an example of prior art, a part of a cross section of one embodiment of an epicyclic gearbox as seen from the side,
- fig. 6a: illustrates schematically a part of a cross section of an epicyclic gearbox comprising a spherical joint according to one embodiment of the invention,
- fig. 6b: illustrates schematically a zoomed view of part of a cross section of an epicyclic gearbox comprising a spherical joint according to one embodiment of the invention,
- fig. 6c and d: illustrates schematically a zoomed view of part of a cross sectional of an epicyclic gearbox comprising a two part torque transfer part according to one embodiment of the invention,
- fig. 7: illustrates schematically a zoomed view of part of a cross section of an epicyclic gearbox comprising a spherical joint according to one embodiment of the invention, where a flange ring is held in place by means of bolts,
- fig. 8: illustrates schematically a part of a cross section of an epicyclic gearbox comprising an angulated spherical joint according to one embodiment of the invention,
- fig. 9: illustrates schematically a part of a cross section of an epicyclic gearbox comprising a combined flange ring,
- fig. 10: illustrates one embodiment of the invention, and
- fig. 11: illustrates another embodiment of the invention.

### Description of known art

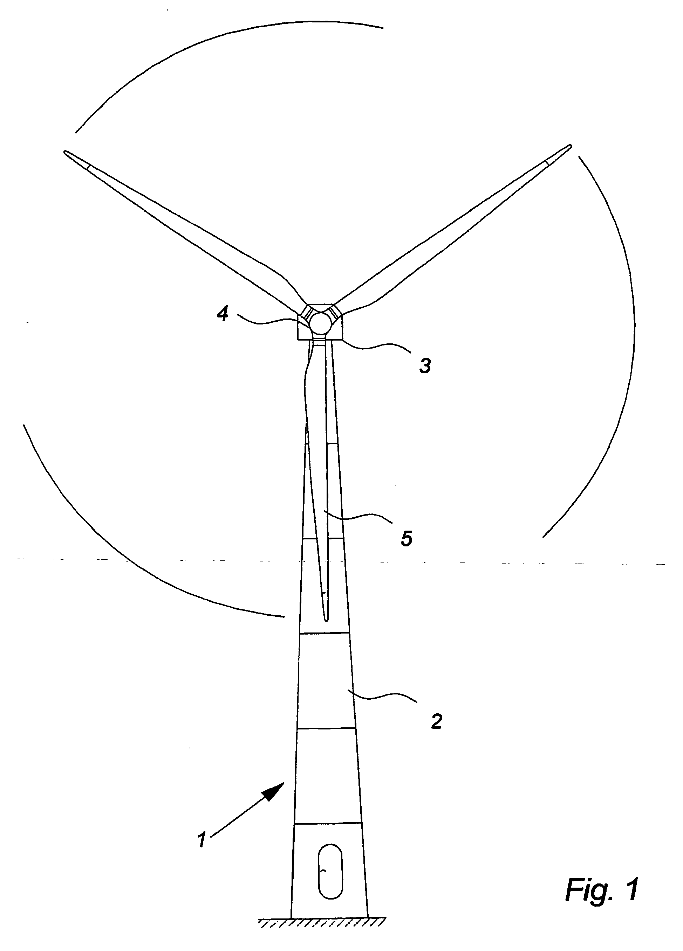

Fig. 1 illustrates a modem wind turbine 1, comprising a tower 2 and a wind turbine nacelle 3 positioned on top of the tower 2. The wind turbine rotor 4, comprising three wind turbine blades 5, is connected to the nacelle 3 through the low speed shaft 6 which extends out of the nacelle 3 front.

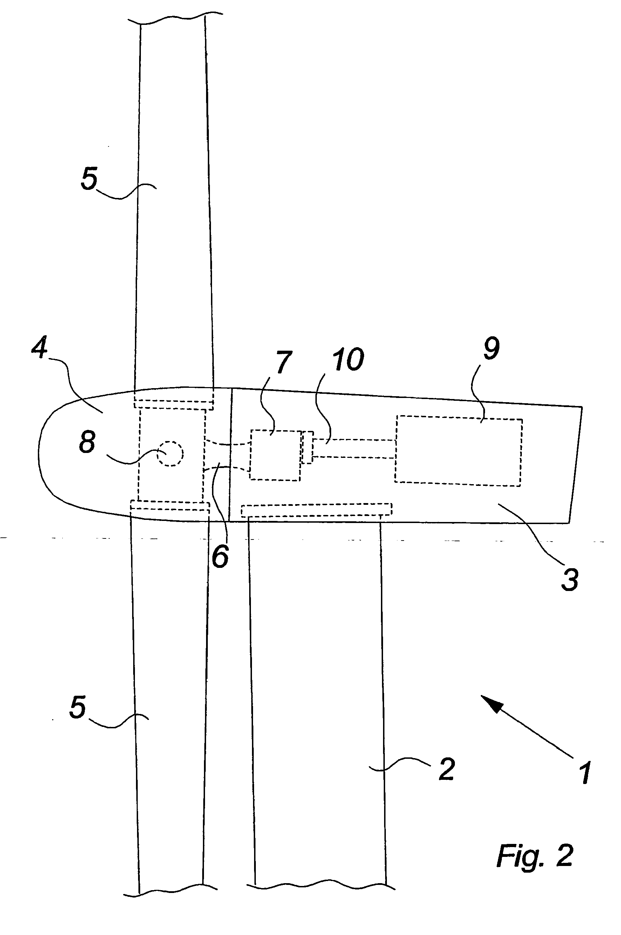

Fig. 2 illustrates an embodiment of a wind turbine nacelle 3, as seen from the side. The drive train in a traditional wind turbine 1 known in the art usually comprises a rotor 4 connected to a gearbox 7 by means of a low speed shaft 6. In this embodiment the rotor 4 comprise only two blades 5 connected to the low speed shaft 6 by means of a teeter mechanism 8, but in another embodiment the rotor 4 could comprise another number of blades 5, such as three blades 5, which is the most common number of blades 5 on modem wind turbines 1. In another embodiment the rotor 4 could also be connected directly to the gearbox 7.

The gearbox 7 is then connected to the generator 9 by means of a high speed shaft 10.

Because of the limited space in the nacelle 3 and to minimize the weight of the nacelle 3 the preferred gearbox 7 type in most modem wind turbines 1 is an epicyclic gearbox, but other gearbox 7 types are also feasible, such as one or more spur gearboxes, worm gearboxes, helical gearboxes or a combination of different transmission and gearbox 7 types.

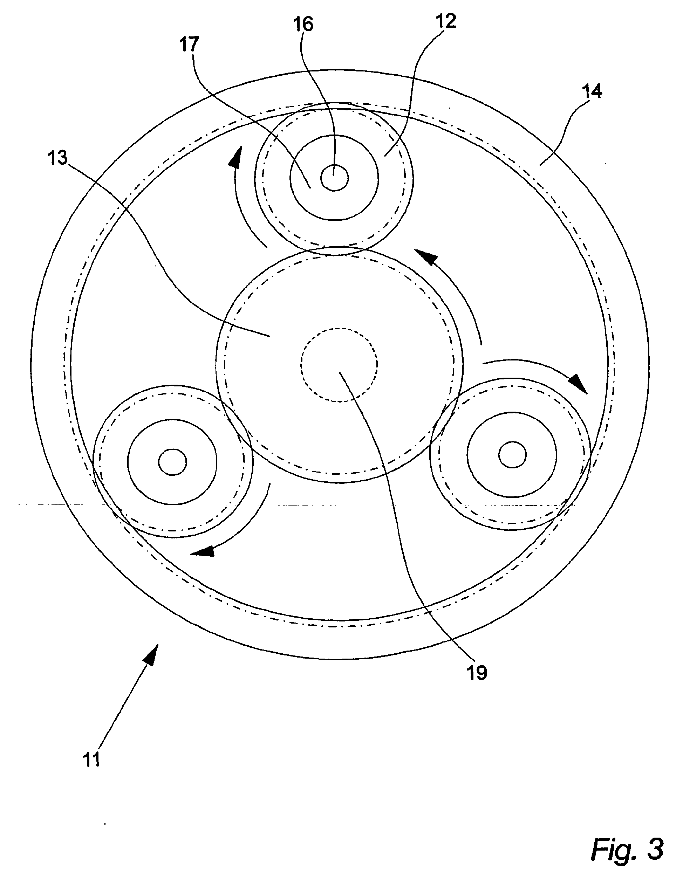

Fig. 3 illustrates as an example of prior art, an embodiment of an epicyclic gear stage 11 as seen from the front. The planet gears 12 mesh with and rotate around a sun gear 13 in the middle and they mesh with an outer annulus gear 14. The arrows indicate that the planet gears 12 all rotate in the same direction and that the sun gear 13 rotates in the opposite direction.

In this embodiment the epicyclic gear stage 11 comprise three planet gears 12, but in another embodiment it could also comprise another other number greater than or equal to 2 planet gears 12.

Each planet gear 12 is provided with one or more planet gear bearings 17 and each of the planet gears 12 with bearings 17 are mounted on a planet gear shaft 16.

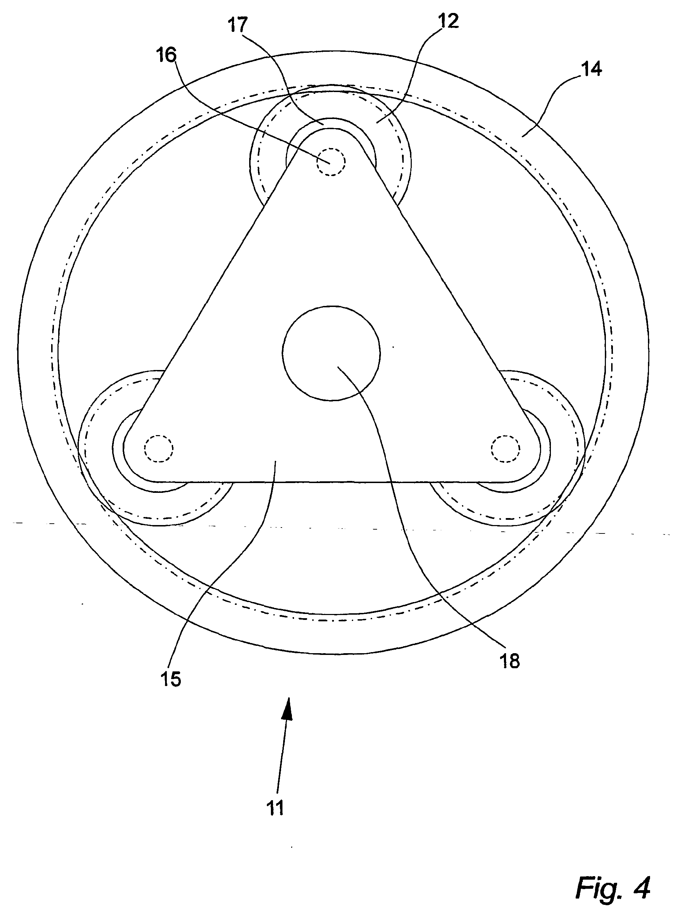

Fig. 4 illustrates as an example of prior art, an embodiment of an epicyclic gear stage 11 comprising a planet carrier 15, as seen from the front. The planet carrier 15 connects the planet gears 12 by fixating the planet gear shafts 16, making it rotate as the planet gears 12 travels around the sun gear.

Typically the annulus gear 14 is connected to a carrying frame, to the gearbox housing or is in other ways fixed, but in some epicyclic gearbox 11 types the annulus gear 14 could also rotate. Furthermore, the illustrated gears show only one stage of a gearbox. The entire gearbox could comprise a number of stages as the one shown to increase the gearing, or it could comprise a number of different stages e.g. a first stage where the sun gear is missing and the input shaft 18 rotates the annulus gear 14, which mesh with a number of planet gears 12. The planet gears 12 of the first stages is then connected to planet gears 12 of a larger size in a second stage, which mesh with a sun gear 13, which is connected to the output shaft of the epicyclic gear stage 11.

Other gearbox designs are also feasible often depending on what the gearbox is to be used for. In wind turbines the gearbox 11 may be designed to carry the entire torque load of the rotor, which means that the gearbox 11 has to be designed to handle this massive torque load on the input side of the gearbox 11, whereas the torque load on the output side of the gearbox would be significantly smaller. Epicyclic gearboxes 11 used in different wind turbines 1 or gearboxes 11 used in other applications could therefore be designed differently to meet different needs.

In this embodiment of an embodiment of an epicyclic gear stage 11, the planet carrier 15 is formed as a one piece plate connecting the three planet gears 12, but in another embodiment the planet carrier 15 could further comprise one or more bearings for guiding and stabilizing the carrier 15. This would e.g. be the case if the carrier 15 was connected to a wind turbine rotor, and the planet carrier 15 also had to transfer the entire load of the rotor. The inner ring of a large diameter bearing could then e.g. be mounted on the outside of the annulus gear 14 and the outer ring of the bearing could be connected to the planet carrier 15, which then would extend beyond the annulus gear 14, or a more or less circular planet carrier 15 could be provided with a bearing around its outer perimeter, where the outer ring of the bearing was connected to the annulus gear 14, the gearbox housing 20 or in other ways fixed.

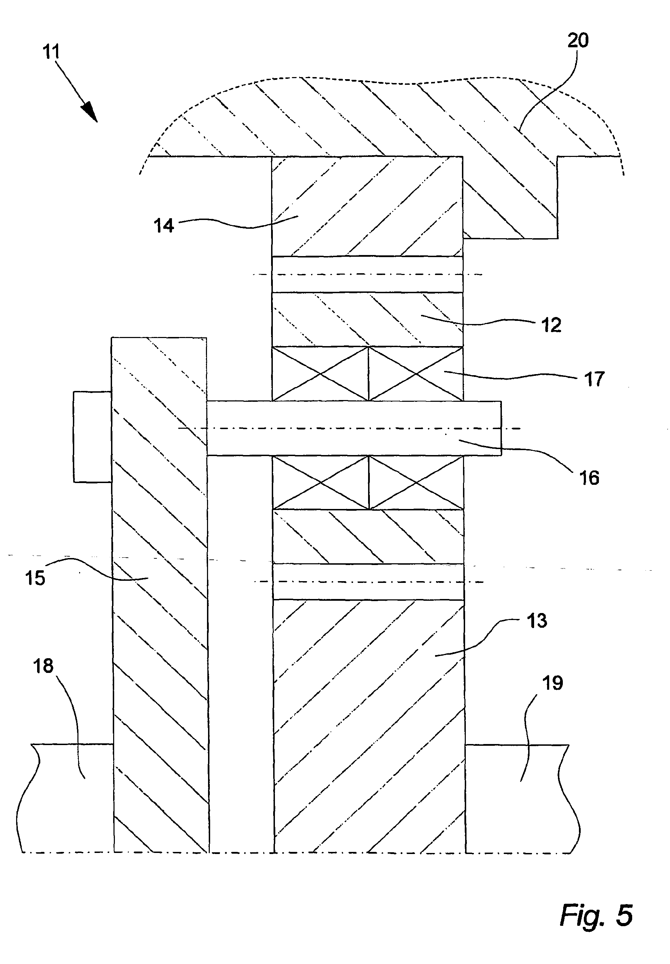

Fig. 5 illustrates as an example of prior art, a part of a cross section of an embodiment of an epicyclic gear stage 11 with a single flange carrier, as seen from the side. In this embodiment of an epicyclic gear stage 11 the planet gears 12 are each provided with two juxtaposed bearings 17 but in another embodiment the planet gears 12 could be provided with another number of bearings 17 or the bearings 17 could be placed in the planet carrier 15, where the shaft 16 then would be rigidly connected to the planet gears 12.

The planet carrier 15 is provided with an input shaft 18, which could be the low speed shaft of a wind turbine, but in another embodiment the carrier 15 could be directly coupled to the input generating equipment such as the hub of a wind turbine rotor.

The planet gears 12 mesh with the annulus gear 14, which in this embodiment is rigidly connected to the gearbox housing 20, and with the sun gear 13, which is provided with an output shaft 19 e.g. connected to another gear stage or connected to a wind turbine generator.

### Detailed description of the invention

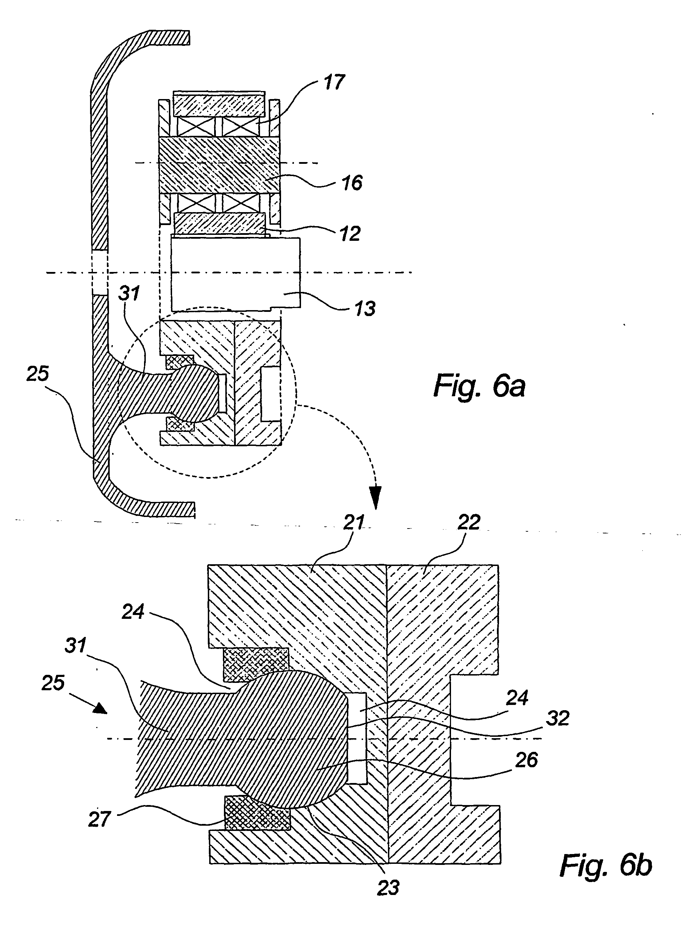

Fig. 6a illustrates schematically a part of a cross section of an epicyclic gearbox comprising a spherical joint according to one embodiment of the invention.

The embodiment shows the planet gears 12 supported by planet gear bearings 17 and planet gear shaft 16.

Some contour lines depicted in fig. 6a are left out in the following figures.

The implementation of the invented epicyclic gearbox ensures that the load distribution, from the wind turbine rotor to the gear, is optimized because of the flexible connection of the torque transfer zone described in relation the following figures, instead of in the mesh between the individual gears. The flexible connection may also sometimes be referred to as ball-and-socket joint.

Fig. 6b illustrates schematically a zoomed view of a part of said gear box, where the planet gear shaft 16 is supported between two planet carrier flanges 21, 22. Torque from the rotor is transferred to the planet carrier flanges 21, 22 by a torque transfer part 25 in a joint 26 which is related to one or both of said flanges 21, 22 at torque transferring zones 23 i.e. the zones where the torque transfer part 25 is in contact with the flanges 21, 22.

The said torque transfer part 25 is for various embodiments of the invention a part of the low speed shaft of a wind turbine, but in other embodiments the torque transfer part 25 is directly coupled to the input generating equipment such as the hub of a wind turbine rotor.

The planet gears 12 mesh with the annulus gear, which for various embodiments of the invention is rigidly connected the gearbox housing. Furthermore the planet gears 12 mesh with the sun gear 13, which is provided with an output shaft e.g. connected to another gear stage or connected to a wind turbine generator.

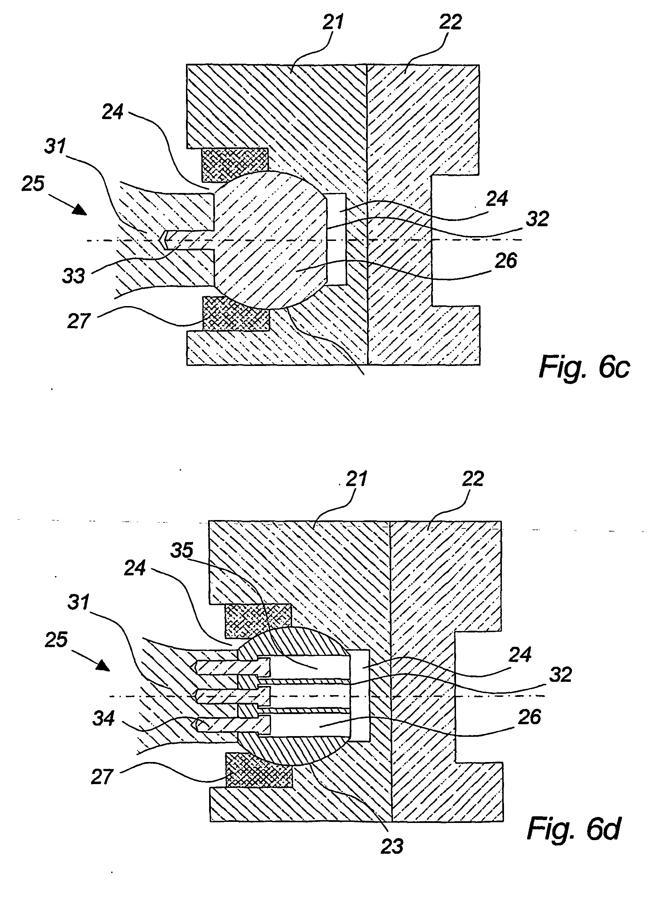

For this embodiment of the invention, said joint 26 is formed with a spherical curvature over at least the part of the joint 26 that comprises said torque transferring zones 23 as can be seen on figure 6.

The torque transfer part 25 comprising said spherical joint 26 and the first and second planet carrier flanges 21, 22 are formed in such a way that there is a free space 24 between said flanges 21, 22 and the torque transfer part 25 except substantially at the torque transferring zones 23. For this embodiment of the invention, the torque transfer zones 23 are located on the spherical portion of said joint 26 as indicated on figure 6b.

The frees space 24 adds flexibility to the connection between the joint 26 of the transfer part 25 and at least one of the planet carrier flanges 21, 22. If there is no free space 24 this could lead to contact between the joint 26 and at least one of the planet carrier flanges 21, 22 which would decrease the flexibility of the connection between the transfer part 25 and the planet carrier flanges 21, 22 significantly e.g. because of friction.

In case of significant deflection of the torque transfer part 25 relative to the planet carrier flanges 21, 22, it is preferred to avoid contact between torque arm part 31 and flange ring 27 affecting the flexibility of the assembly e.g. occurring from friction.

For this reason the joint 26 has a spherical form ending in a straight line. The straight line assures that contact between the joint 26 and at least one of the planet carrier flanges 21, 22 is avoided. A contact in this area will e.g. reduce the flexibility of the assembly of the joint 26 and the planet carrier flange 21.

According to an advantageous embodiment of the invention the torque transferring zones defines the zones 23 where torque is transferred from the wind turbine rotor, via the torque transfer part and the one or more joints 26, to at least one of the planet carrier flanges 21, 22. Because of the well-balanced geometry connection between the one or more joints 26 and the at least one planet carrier flange21, 22, the torque transfer zones 23 may be flexible. Deflections between wind turbine rotor and the planet carrier caused by weight of the wind turbine rotor and wind forces can lead to bad load distribution along the gear face width. Hence the flexible connection will permit the planet carrier and therewith the gears to balance into the right position which allow good load distribution along the teeth width and proper load sharing between planet gears.
As a consequence the torque transfer zones 23 may not always be located at exact the same location, the length and the outer diameter of the torque transfer zone 23 will be variable.

The location of the torque transfer zone 23 depends on load applied to the epicyclic gear stage from the wind turbine rotor. Hence the location of the torque transfer zones 23 will be calculated depending on the load from the wind turbine rotor. This is very advantageous because the same epicyclic gear configuration can be chosen for different turbines by modifying only the torque transfer zones 23.

The joint 26 is held in place by a flange ring 27 attached to one or more of the planet carrier flanges 21, 22. In case of high deflection of e.g. the planet carrier flange 21 relatively to the torque transfer part 25 comprising the arm part 31, a contact between the flange ring 27 and the arm part 31 may occur. Because of the non steel material properties of the flange ring 27 the coefficient of friction is relatively low and will not affect the flexibility of the assembly.

It is very advantageous to manufacture to torque transfer part 25 and the joint 26 in one piece. As illustrated the torque transfer part 25, may comprise a arm part 31 which is terminating in a spherical shaped joint 26. These three parts forms together, in an embodiment of the invention, the torque transfer part 25 as illustrated in figure 6a.

It is possible, during the development of the torque transfer part 25, to decide the length of the arm part 31 of the torque transfer part 25. Extending the arm part 31 adds a greater flexibility to the flexible connection between the torque transfer part 25 and the planet carrier flanges 21, 22. In the same way when the arm part 31 is made shorter the connection between the torque transfer part 25 and the planet carrier flanges 21, 22 become less flexible.

In the same way it is possible, during the development of the torque transfer part 25, to change the diameter of the joint 26 to change the degree of flexibility of the connection.

One advantage in forming the torque transfer part 25 in one piece is that it is possible to manufacture the whole torque transfer part 25 before assembling the gear. This enables manufacture of a torque transfer part 25 which can meet high demands to precision. Development is also eased because when having a torque transfer part 25 in one piece, it is not necessary to calculate on a plurality of small parts which would otherwise be needed. Furthermore it is also easier and faster to assemble the gear stage when the torque transfer part 25 is made in one piece compared a torque transfer part comprising a plurality of parts. The more parts the torque transfer part 25 comprises the more parts is also exposed to tear, in risk of break down, needing to be maintained etc.

Figure 6c and 6d illustrates an alternative embodiment of the invention, where the torque transfer part 25 is made from more than one piece.
In the embodiment illustrated in figure 6c, the spherical joint part 26 is equipped with a thread part 33 which meshes with a corresponding thread of the arm part 31 of the torque transfer part 25 and thereby connecting the spherical joint part 26 to the rest of the torque transfer part 25. It should be noted that this embodiment could also be implemented if the torque transfer part 25 does not comprise an arm part 31.

In the embodiment illustrated in figure 6d, the spherical joint part 26 is connected to the rest of the torque transfer part 25 by means of one or more bolts 34 e.g. three as illustrated. The spherical joint part 26 comprises ducts 35 allowing bolts 34 to mesh with thread in the torque transfer part 25 and thereby connecting the spherical joint part 26 to the rest of the torque transfer part 25.

This embodiment is advantageous if it is desirable to be able to change the spherical joint part 26 e.g. as result of tear.

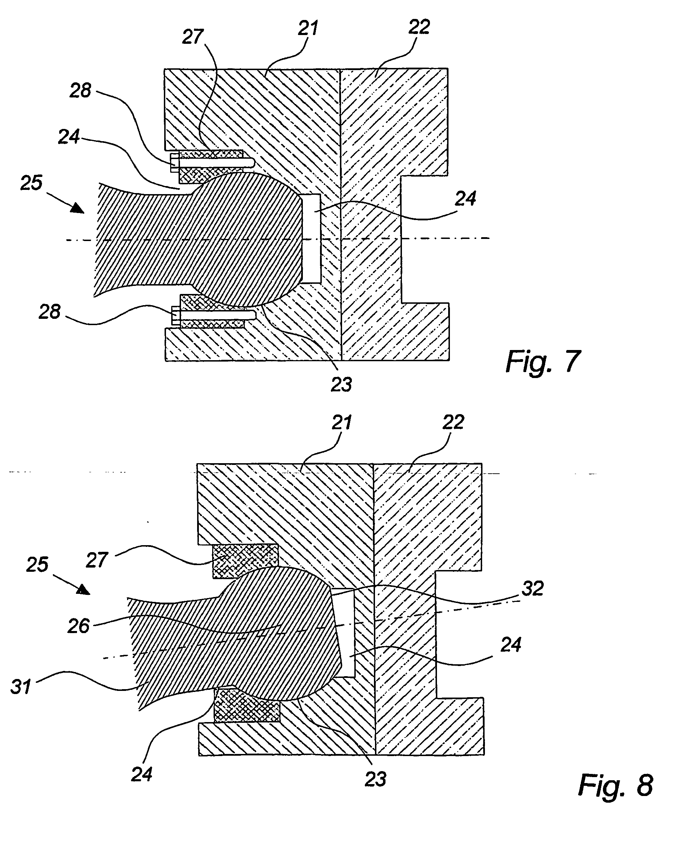

Figure 7 illustrates one embodiment of the invention where said flange ring 27 is held in place by means of bolts 28. The bolts 28 are entered thru holes in the flange ring 27 and attached to the planet carrier 21.

For other embodiments, the bolts 28 are attached to the planet carrier 22 or to both planet carriers 21, 22.

The bolts 28 may for various embodiments vary in dimensions as to adapt to the dimensions of carrier flanges 21, 22, the through holes in the carrier flanges 21, 22, the flange ring 27, the torque and forces that it may be exposed to etc. Furthermore the material of which the bolts 29 are made of may be of specific alloys that enables the bolts to carry high torques and forces.

For one embodiment of the invention, the joint 26 is held rigidly in place by said flange ring 27 attached to one or more of the planet carrier flanges 21,22. Hereby is meant that joint is fixed regarding to movements in the all three main directions as well as in regard to rotating movements in relation to the carrier flanges 21, 22.

Figure 8 illustrates another embodiment of the invention, where the joint 26 has some freedom to rotate substantially around its spherical centre. The joint 26 and hereby the part of the torque transferring part 25 comprising said joint 26 can thereby adapt to movements of the torque transferring part 25 if necessary. The joint 26 can be lubricated as to enhance the free movement of the joint 26.

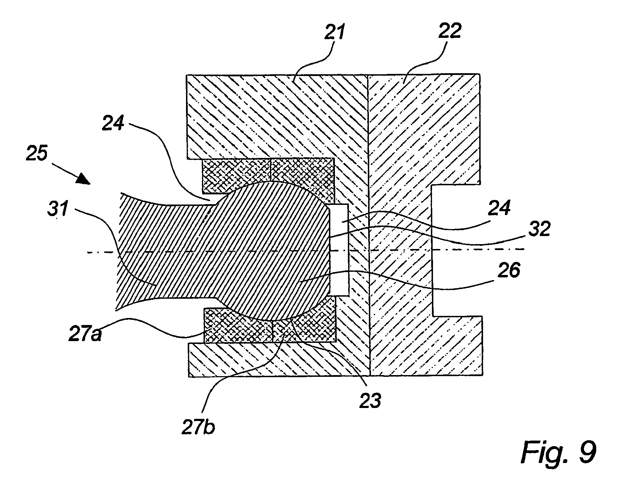

Figure 9 illustrates schematically a part of a cross section of an epicyclic gearbox comprising a combined flange ring 27a, 27b.

Torque from the rotor is transferred to the planet carrier flanges 21, 22 by a torque transfer part 25 in the joint 26 which is related to one or both of said flanges 21, 22 at torque transferring zones 23 i.e. the zones where the torque transfer part 25 is in contact with the flanges 21, 22.

For this embodiment of the invention, said joint 26 is formed with a spherical curvature over at least the part of the joint 26 that comprises said torque transferring zones 23 as can be seen on the figure.

The joint 26 is held in place by combined flange ring parts 27a, 27b attached to one or more of the planet carrier flanges 21, 22.

The torque transfer part 25 comprising said spherical curved joint 26 and the combined flange ring parts 27a, 27b, are formed in such a way that they fit substantially at the torque transferring zones 23. For this embodiment of the invention, the torque transfer zones 23 are located on the spherical portion of said joint 26 as indicated on figure 9.

For one embodiment of the invention comprising combined flange rings 27a, 27b said rings can be made of a material with special material characteristics e.g. regarding hardness, friction coefficient, wear etc. and /or said rings can be made of a material different from the material of the planet carrier flanges 21, 22. According to a further embodiment of the invention the flange rings 27a and 27b is made of a material having non-steel material properties e.g. such as copper.

Furthermore for various embodiments of the invention said combined flange rings 27a, 27b can be prepared as to be replaceable e.g. due to wear and tear.

For further embodiments said combined flange rings 27a, 27b is held in place by means of bolts 28.

For various embodiments of the invention, said joint 26 is of other shapes than the depicted and described spherical shape in figures 6a to 9. The shapes can be e.g. conical, cylindrical, rectangular or other forms that enable a good flexibility and enhanced mantling of the gearbox.
For various embodiments of the invention, the torque transfer part 25 and said first planet carrier flange 21 are formed in one part.

The flange rings 27, 27a, 27b are adapted to fit the specific form of joint 26.

As can be derived from figure 6 - 9 the implementation of one or more flange rings can be done in a plurality of different ways and therefore the ways described are only part of a non-exhaustive list of different embodiments.

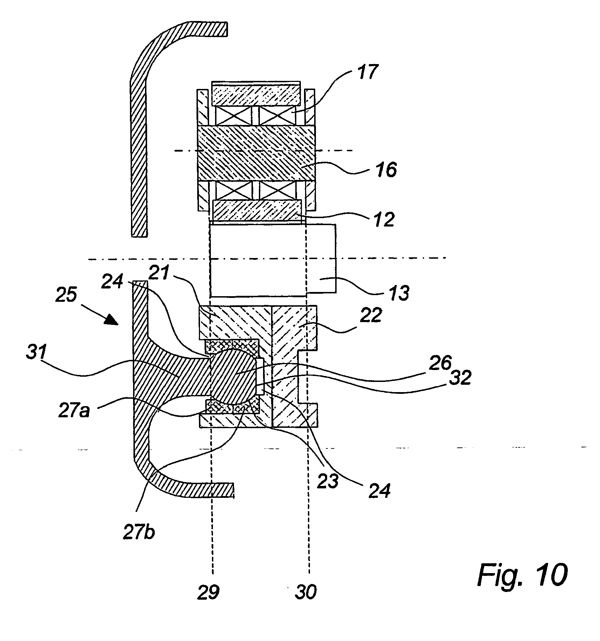

Fig. 10 illustrates for one embodiment of the invention, an epicyclic gear stage wherein torque from the wind turbine rotor is transferred via a torque transfer part 25 connected to said planet carrier 21, 22 at one or more torque transferring zones 23, where said one or more torque transferring zones 23 are located between a first and a second plane 29, 30 said planes being substantially perpendicular to an axis of rotation of the sun gear 13.

For this. embodiment, the first plane 29 is flush with a first inner side of the planet carrier 21 at a position where the gear shaft 16 is carried by the planet carrier 21, and where the second plane 30 is flush with a second inner side of the planet carrier 22 at a position where the gear shaft 16 is carried by the planet carrier 22.

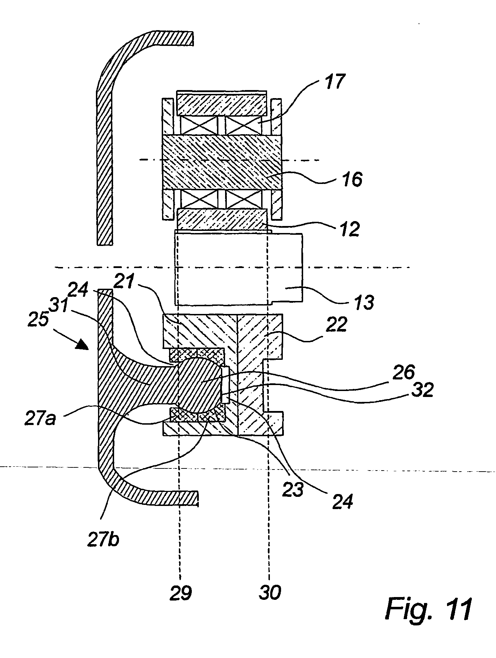

Fig. 11 illustrates for another embodiment of the invention, an epicyclic gear stage wherein torque from the wind turbine rotor is transferred via a torque transfer part 25 connected to said planet carrier 21, 22 at one or more torque transferring zones 23, where said one or more torque transferring zones 23 are located between a first and a second plane 29, 30 said planes being substantially perpendicular to an axis of rotation of the sun gear 13.

For this embodiment, the first plane 29 is flush with one end of the planet gears 12, and the second plane 30 is flush with the other end of the planet gears 12.

For yet another embodiment of the invention, said first and second plane 29, 30 are planes substantial perpendicular to the axis of rotation of the sun gear 13, and the first plane comprises a first point of the engaging surface of the planet gears, and the second plane comprises a second point of the engaging surface of the planet gears.

For other embodiments of the invention, the first and second planet carrier flanges 21, 22 are formed in one part.

For even further embodiments of the invention, the torque transfer part 25, the first planet carrier flange 21 and the second planet carrier flange 22 are formed in one part.

For various embodiments of the invention, each of the torque transfer part 25, the first planet carrier flange 21 and the second planet carrier flange 22 may be formed in two or more parts.

### Reference list

In the drawings the following reference numbers refer to:
- 1.: Wind turbine
- 2.: Tower
- 3.: Nacelle
- 4.: Rotor
- 5.: Blade
- 6.: Low speed shaft
- 7.: Wind turbine gearbox
- 8.: Teeter mechanism
- 9.: Generator
- 10.: High speed shaft
- 11.: Epicyclic gear stage
- 12.: Planet gear
- 13.: Sun gear
- 14.: Annulus gear
- 15.: Planet carrier
- 16.: Planet gear shaft
- 17.: Planet gear bearing
- 18.: Input shaft
- 19.: Output shaft
- 20.: Gearbox housing
- 21.: First planet carrier flange
- 22.: Second planet carrier flange
- 23.: Torque transferring zones
- 24.: Free space between planet carrier flanges and torque transfer part
- 25.: Torque transfer part
- 26.: Spherical joint
- 27.: Flange ring
- 27a,b: Combined flange rings
- 28.: Bolts
- 29.: First plane perpendicular to an axis of rotation of the sun gear
- 30.: Second plane perpendicular to an axis of rotation of the sun gear
- 31.: Arm part of torque transfer part
- 32.: Straight line
- 33.: Thread part
- 34.: Bolt
- 35.: Duct

## Claims

1. A wind turbine (1) comprising a wind turbine gearbox with an epicyclic gear stage (11), said epicyclic gear stage comprising
a sun gear (13),
an annulus gear (14),
at least two planet gears (12), engaged with the sun gear (13) and the annulus gear (14),
a planet carrier (15) for carrying the planet gears (12), and
a torque transfer part (25) for transferring torque from the wind turbine rotor (4)
wherein said torque transfer part (25) is flexible connected to at least one planet carrier flange (21, 22)
**characterized in that**
said torque transfer part (25) is flexible connected to at least one planet carrier flange (21, 22) with at least three flexible ball-and-socket joints transferring torque from said wind turbine rotor (4) to said at least one planet carrier flange (21,22),
wherein the ball part of said flexible ball-and-socket joints is part of said torque transfer part (25).

2. A wind turbine (1) according to claim 1, wherein said planet carrier (15) comprises at least a first and a second planet carrier flange (21, 22).

3. A wind turbine (1) according to claim 2, wherein the socket part of said at least three flexible ball-and-socket joints is part of only one of said first and second planet carrier flanges (21, 22).

4. A wind turbine (1) according to any for the preceding claims, wherein the ball part of said at least three flexible ball-and-socket joints are formed in one piece with the torque transfer part (25).

5. A wind turbine (1) according to any of the preceding claims 1 to 3, wherein the ball part of said at least three flexible ball-and-socket joints is connected to said torque transfer part (25) by means of one or more threads.

6. A wind turbine (1) according to any of the preceding claims, wherein the torque transfer part (25) and the planet carrier (15) is connected by means of said at least three flexible ball-and-socket joints so that a free space (24) occurs between the torque transfer part (25) and the planet carrier flange (21, 22) in said at least three flexible ball-and-socket joints.

7. A wind turbine (1) according to any of the claims 2-6, wherein torque from the wind turbine rotor (4) is transferred via a torque transfer part (25) connected to said planet carrier (15) at one or more torque transferring zones (23),
where said one or more torque transferring zones (23) are located between a first and a second plane (29, 30), said planes (29, 30) being substantially perpendicular to an axis of rotation of the sun gear (13),
where the first plane (29) is flush with a first inner side of said first planet carrier flange (21) at a position where the gear shaft (16) is carried by said first planet carrier flange (21), and
where the second plane (30) is flush with a second inner side of said second planet carrier flange (22) at a position where the gear shaft (16) is carried by said second planet carrier flange (22).

8. A wind turbine (1) according to any of claims 2 to 7, wherein said first planet carrier flange (21) and said second planet carrier flange (22) are formed in one part.

9. A wind turbine (1) according to any of the preceding claims, wherein said one or more flexible ball-and-socket joints is held in place by one or more flange rings (27) attached to said planet carrier (15).

10. A wind turbine (1) according to claim 9, wherein said one or more flange rings (27) is held in place by means of bolts (28).

11. A wind turbine (1) according to claim 9 or 10, wherein said one or more flange rings (27) is made of a bearing-sleeve material.

12. A wind turbine (1) according to any of the preceding claims, wherein said sun gear (13) and said planet gear (12) and said annulus gear (14) are single helical gears.

13. A wind turbine (1) according to any of the preceding claims, wherein said annulus gear (14) rotates during operation.

## Patentansprüche

1. Windturbine (1), die eine Getriebeeinheit für Windturbinen mit einer Planetengetriebestufe (11) umfasst, wobei die Planetengetriebestufe Folgendes umfasst:
ein Sonnenrad (13),
ein Hohlrad (14),
wenigstens zwei Planetenräder (12), die mit dem Sonnenrad (13) und dem Hohlrad (14) im Eingriff sind,
einen Planetenträger (15) zum Tragen der Planetenräder (12), und
ein Drehmomentübertragungsteil (25) zur Übertragung von Drehmoment vom Windturbinenrotor (4),
wobei das Drehmomentübertragungsteil (25) mit wenigstens einem Planetenträgerflansch (21, 22) flexibel verbunden ist,
**dadurch gekennzeichnet, dass**
das Drehmomentübertragungsteil (25) mit wenigstens einem Planetenträgerflansch (21, 22) über wenigstens drei flexible Kugelgelenke flexibel verbunden ist, die Drehmoment vom Windturbinenrotor (4) auf den wenigstens einen Planetenträgerflansch (21, 22) übertragen,
wobei der Kopfteil der flexiblen Kugelgelenke ein Teil des Drehmomentübertragungsteils (25) ist.

2. Windturbine (1) nach Anspruch 1, wobei der Planetenträger (15) wenigstens einen ersten und einen zweiten Planetenträgerflansch (21, 22) umfasst.

3. Windturbine (1) nach Anspruch 2, wobei der Lagerteil der wenigstens drei flexiblen Kugelgelenke ein Teil von nur einem der ersten und zweiten Planotenträgerflansche (21, 22) ist.

4. Windturbine (1) nach einem der vorhergehenden Ansprüche, wobei der Kopfteil der wenigstens drei flexiblen Kugelgelenke in einem Stück mit dem Drehmomentübertragungsteil (25) ausgebildet ist.

5. Windturbine (1) nach einem der vorhergehenden Ansprüche 1 bis 3, wobei der Kopfteil der wenigstens drei flexiblen Kugelgelenke mit dem Drehmomentübertragungsteil (25) mittels eines oder mehrerer Gewinde verbunden ist.

6. Windturbine (1) nach einem der vorhergehenden Ansprüche, wobei das Drehmomentübertragungsteil (25) und der Planetenträger (15) derart mittels der wenigstens drei flexiblen Kugelgelenke verbunden sind, dass in den wenigstens drei flexiblen Kugelgelenken ein Freiraum (24) zwischen dem Drehmomentübertragungsteil (25) und dem Planetenträgerflansch (21, 22) vorhanden ist.

7. Windturbine (1) nach einem der Ansprüche 2 bis 6, wobei Drehmoment vom Windturbinenrotor (4) über ein Drehmomentübertragungsteil (25), das mit dem Planetenträger (15) verbunden ist, in einer oder mehreren Drehmomentübertragungszonen (23) übertragen wird,
wobei die eine oder mehreren Drehmomentübertragungszonen (23) sich zwischen einer ersten und einer zweiten Ebene (29, 30) befinden und wobei die Ebenen (29, 30) im Wesentlichen senkrecht zu einer Drehachse des Sonnenrads (13) stehen,
wobei die erste Ebene (29) bündig mit einer ersten inneren Seite des ersten Planetenträgerflansches (21) ist, und dies an einer Position, bei der die Getriebewelle (16) vom ersten Planetenträgerflansch (21) getragen wird, und
wobei die zweite Ebene (30) bündig mit einer zweiten inneren Seite des zweiten Planetenträgerflansches (22) ist, und dies an einer Position, bei der die Getriebewelle (16) vom zweiten Planetenträgerflansch (22) getragen wird.

8. Windturbine (1) nach einem der Ansprüche 2 bis 7, wobei der erste Planetenträgerflansch (21) und der zweite Planetenträgerflansch (22) in einem Teil ausgebildet sind.

9. Windturbine (1) nach einem der vorhergehenden Ansprüche, wobei das eine oder die mehreren flexiblen Kugelgelenke durch einen oder mehrere Flanschringe (27), die am Planetenträger (15) angebracht sind, in Position gehalten werden.

10. Windturbine (1) nach Anspruch 9, wobei der eine oder die mehreren Flanschringe (27) mittels Schrauben (28) in Position gehalten werden.

11. Windturbine (1) nach Anspruch 9 oder 10, wobei der eine oder die mehreren Flanschringe (27) aus einem Lagerbüchsenmaterial gefertigt sind.

12. Windturbine (1) nach einem der vorhergehenden Ansprüche, wobei das Sonnenrad (13) und das Planetenrad (12) und das Hohlrad (14) einfach spiralverzahnte Zahnräder sind.

13. Windturbine (1) nach einem der vorhergehenden Ansprüche, wobei das Hohlrad (14) während des Betriebs rotiert.

## Revendications

1. Turbine éolienne (1) comprenant une boîte d'engrenages de turbine éolienne avec un étage d'engrenage planétaire (11), ledit étage d'engrenage planétaire comprenant :
un planétaire (13),
une couronne (14),
au moins deux satellites (12), engrenés avec le planétaire (13) et la couronne (14),
un porte-satellites (15) pour porter les satellites (12), et
une partie de transfert de couple (25) pour transférer un couple depuis le rotor de turbine éolienne (4)
dans laquelle ladite partie de transfert de couple (25) est raccordée de manière flexible à au moins une flasque de porte-satellites (21, 22) **caractérisée en ce que**
ladite partie de transfert de couple (25) est raccordée de manière flexible à au moins une flasque de porte-satellites (21, 22) à l'aide d'au moins trois articulations à rotule flexibles transférant un couple depuis ledit rotor de turbine éolienne (4) vers ladite flasque de porte-satellites (21, 22),
dans laquelle la partie bille desdites articulations à rotule flexibles est une partie de ladite partie de transfert de couple (25).

2. Turbine éolienne (1) selon la revendication 1, dans laquelle ledit porte-satellites (15) comprend au moins des première et deuxième flasques de porte-satellites (21, 22).

3. Turbine éolienne (1) selon la revendication 2, dans laquelle la partie rouleau desdites au moins trois articulations à rotule flexibles est une partie d'uniquement l'une desdites première et deuxième flasques de porte-satellites (21, 22).

4. Turbine éolienne (1) selon l'une quelconque des revendications précédentes, dans laquelle la partie bille desdites au moins trois articulations à rotule flexibles est formée d'une pièce avec la partie de transfert de couple (25).

5. Turbine éolienne (1) selon l'une quelconque des revendications 1 à 3 précédentes, dans laquelle la partie bille desdites au moins trois articulations à rotule flexibles est raccordée à ladite partie de transfert de couple (25) au moyen d'un ou plusieurs filets.

6. Turbine éolienne (1) selon l'une quelconque des revendications précédentes, dans laquelle la partie de transfert de couple (25) et le porte-satellites (15) sont raccordés au moyen desdites au moins trois articulations à rotule flexibles de sorte qu'un espace libre (24) apparaisse entre la partie de transfert de couple (25) et la flasque de porte-satellites (21, 22) dans lesdites au moins trois articulations à rotule flexibles.

7. Turbine éolienne (1) selon l'une quelconque des revendications 2 à 6, dans laquelle le couple produit par le rotor de turbine éolienne (4) est transféré par l'intermédiaire d'une partie de transfert de couple (25) raccordée audit porte-satellites (15) dans au moins une ou plusieurs zones de transfert de couple (23),
dans laquelle lesdites une ou plusieurs zones de transfert de couple (23) se trouvent entre des premier et deuxième plans (29, 30), lesdits plans (29, 30) étant sensiblement perpendiculaires à un axe de rotation du planétaire (13),
dans laquelle le premier plan (29) est à fleur avec un premier côté intérieur de ladite première flasque de porte-satellites (21) dans une position dans laquelle l'arbre de transmission (16) est porté par ladite première flasque de porte-satellites (21), et
dans laquelle le deuxième plan (30) est à fleur avec un deuxième côté intérieur de ladite deuxième flasque de pbrte-satellites (22) dans une position dans laquelle l'arbre de transmission (16) est porté par ladite deuxième flasque de porte-satellites (22).

8. Turbine éolienne (1) selon l'une quelconque des revendications 2 à 7, dans laquelle ladite première flasque de porte-satellites (21) et ladite deuxième flasque de porte-satellites (22) sont formées d'une pièce.

9. Turbine éolienne (1) selon l'une quelconque des revendications précédentes, dans laquelle lesdites une ou plusieurs articulations à rotule flexibles sont maintenues en place par une ou plusieurs brides circulaires (27) fixées audit porte-satellites (15).

10. Turbine éolienne (1) selon la revendication 9, dans laquelle lesdites une ou plusieurs brides circulaires (27) sont maintenues en place au moyen de boulons (28).

11. Turbine éolienne (1) selon la revendication 9 ou 10, dans laquelle lesdites une ou plusieurs brides circulaires (27) sont constituées d'un matériau pour manchon.

12. Turbine éolienne (1) selon l'une quelconque des revendications précédentes, dans laquelle ledit planétaire (13) et ledit satellite (12) et ladite couronne (14) sont des roues cylindriques à denture hélicoïdale.

13. Turbine éolienne (1) selon l'une quelconque des revendications précédentes, dans laquelle ladite couronne (14) tourne pendant le fonctionnement.
